# EUROPEAN PATENT APPLICATION

(11) **EP 2 161 294 A1**
(43) Date of publication of application: **10.03.2010**
(21) Application number: 08075746.1
(22) Date of filing: 05.09.2008
(51) Int. Cl.: C08G 63/181, C09D 5/03, C09D 167/00, B44C 1/17

(54) **Hydroxyl polyester resins with high Tg**

(71) Applicant: Hexion Specialty Chemicals Research Belgium S.A., 1348 Ottignies Louvain-la-Neuve (BE)
(72) Inventor: Beccaria, Damiano, 12040 Sant'Albano Stura CN (IT); Bejko, Imir, 12040 Sant'Albano Stura CN (IT); Capra, Andrea, 12040 Sant'Albano Stura CN (IT); Carlevaris, Lino Natale, 12040 Sant'Albano Stura CN (IT); Munari, Allessandro, 12040 Sant'Albano Stura CN (IT)

(57) **Abstract**

The present invention relates to an amorphous polyester containing hydroxyl groups and prepared from an acid constituent comprising from 0,1% to 100% moles of isophthalic acid or terephthalic acid, from an alcohol constituent comprising from 0 to 40% moles of neopentylglycol, from 0 to 40% moles of at least one dihydroxylated compound other than neopentylglycol and from 60 to 100% moles of polyhydroxylated compound containing at least 3 hydroxyl groups and from 0,1 to 10% moles of aliphatic, cycloaliphatic, containing trimethylolethane (TME the said amorphous polyester having a glass transition (Tg) of at least 60°C, and a hydroxyl number of 270 to 350 mgKOH/g, preferably 280 to, 310 mgKOH/g.

## Description

The present invention relates to a thermally curable hydroxyl polyester resins containing trimethylolethane (TME) suitable for powder coating composition based on hydroxy functional polyester resins with a high hydroxy value 280 to 340mg KOH/g and cured with a self blocked uretdione. The powder formulations are suitable for the preparation of a decorated substrate, by transfer printing.
The transfer printing comprises the steps of: submitting a substrate to a treatment to prepare its surface for the application of a coating, applying a coating to the surface of the substrate in one or more cycles, covering the surface of the substrate with a sheet comprising a decoration which is to be transferred to said surface, and heating the substrate and the sheet comprising the decoration to effect the transfer of the decoration from the sheet onto the substrate.

Such a process is known from patent application EP 0 817 728, which is directed to a process and the relevant apparatus for making decorated, extruded, profiled elements.

EP 1 162 241 is about a powder coating composition comprising a mixture of resins wherein at least one resin has a hydroxy number of less than 75 mg KOH/g, at least one resin has a hydroxy number of at least 75 mg KOH/g, and a curing agent for the resins. The curing agents used are isocyanate-functional products that are under environmental pressure due to their toxicological aspects.

In US 3,907,974 curable decorating systems for glass or metal containers using a heat transfer decoration are disclosed.

In WO 98/08694 a process is disclosed for decorating metal, plastic or the like materials. In this publication very little information is given on the material used to coat the surface of the substrate.

It was found that the resin used to coat the substrate before the transfer printing step is of the utmost importance to the properties and appearance of the decorated substrate.

The decorated substrate should have good mechanical properties (e.g. scratch resistance, Tg of the cured film, gloss, weathering and adhesion to the substrate), the image should be transferred completely in the transfer printing process, and the image's support (normally paper) should detach easily after transfer of the image.

The industry is also looking for resins to be used in powder coating application with good storage stability in hot and humid climate. Such a resin needs to have a Tg value high enough to avoid sintering during storage.

Polyester resins with hydroxyl number of 300 mg KOH/g or above have a low molecular weight and this means a low Tg (see EP 1 162 2412 gives for example 48-50°C); this range of temperature starts being critical from the storage point of view.

It was surprisingly found the incorporation of trimethylolethane (TME) in the polyester composition results in a significant increase in the Tg value of the polyester resin and leading to improve the storage stability in hot-humid conditions.

The potential use of TME as monomer in resins production is known from a long time, such as listed amongst other polyols in the US 6,808,821, 6,268,464, 6,747,070, 6,710,137, 6,599,992, 6,635,721, US application 2002/0114953 and 2005/0090636.
US 6,635,721 patent describes TME as possible monomer for the preparation of branched amorphous polyesters but no advantages coming from the use of TME are described.

US application 2002/0114953 describes TME as typical example of polyhydric alcohol but no specific effect of the TME on the resin properties are described.

More over polyester based on isophthalic acid to improve the exterior durability of the cured coating has a reverse effect on the Tg of the resin and therefore increases the tendency of sintering of the resins.

An amorphous polyester containing hydroxyl groups according to the invention, is prepared from an acid constituent comprising from 0,1% to 100% moles of isophthalic acid or terephthalic acid, from 0 to 45% moles of at least one dicarboxylic acid or anhydride other than isophathalic or terephthalic acid and from 0 to 25% moles of polycarboxylic acid or anhydride containing at least three carboxyl groups and from an alcohol constituent comprising from 0 to 40% moles of neopentylglycol, from 0 to 40% moles of at least one dihydroxylated compound other than neopentylglycol and from 60 to 100% moles of polyhydroxylated compound containing at least 3 hydroxyl groups and from 0,1 to 10% moles of aliphatic, cycloaliphatic, the said amorphous polyester having a glass transition (Tg) of at least 60°C, and a hydroxyl number of 270 to 350 mgKOH/g, preferably 280 to 310 mgKOH/g.
The hydroxyl terminated polyester is formed through the esterification or condensation reaction of:
a dicarboxylic acid selected from the group consisting of isophthalic acid (IPA), terephthalic acid (TPA) 1,4-cyclohexane dicarboxylic acid (CHDA), 1,4-cyclohexane dimethylcarboxylic acid and mixtures thereof, with at least about 98% moles of the aromatic acid being isophthalic and polyol, such as trimethylolpropane (TMP), trimethylolethane (TME), pentaerythritol (PE), ditrimethylolpropane (DI-TMP) and mixtures of thereof, with at least about 93% moles is trimethylolethane (TME) and addition of diols selected from the group consisting of neopentyl glycol, cyclohexane dimethanol, 1,6 hexane diol, ethylene glycol, propylene glycol, 1,3-butylene glycol, 1,4-butane diol, pentane diol, hexylene glycol, diethylene glycol, dipropylene glycol, triethylene glycol, 2-butyl-2-ethyl diol, 1,3-propanediol, 2,2,4-trimethyl-1,3-pentane diol, hydrogenated bisphenol A, 1,3-pentane diol, 3-hydroxy-2,2-diemthyl propyl 3-hydroxy-2,2-dimethyl-propanoate, methyl propane diol, 2-methyl, 2-ethyl, 1,3-propane diol, vinyl cyclohexane diol and mixtures thereof.
In an alternative aspect of the invention, neopentyl glycol can be replaced with a diol selected from the group consisting of 2-butyl-2-ethyl-1,3 propanediol (BEPD), 1,4 butane diol, 3-hydroxy-2,2-dimethyl propyl-3-hydroxy-2,2-dimethyl propionate, unoxol 6 diol, 2-methyl-1,3-propane diol (MPD), hydroxylpivalyl hydroxypivalate (HPHP), hydrogenated Bisphenol A and mixtures thereof.

Raw materials from renewable resources could also be used as source of raw materials, like sorbitol derivatives, dimer fatty acids, glycerol (derived from the production of bio-diesel), lactic acid derivatives, fructose derivatives, mannitol derivatives, furfural derivatives, pyrazol derivatives and the like. These monomers to produce the claimed resin compositions could be use alone or in combination with petrochemical based monomers.

Optionally, the starting mixture for the esterification or condensation reaction may further include from 0.01 to 5% moles of a polyacid selected from the group consisting of trimellitic anhydride (TMA), citric acid, and mixtures thereof.

It will be appreciated that the incorporation of the polyacid or the polyol may be performed during the first step or in the second step of preparation of the present resin.
The polyester may be prepared according to conventional procedures by esterification or transesterification, optionally in the presence of customary esterification catalyst for example dibutyltin oxide or tetrabutyl titanate. The preparation conditions and the COOH/OH ratio may be selected so as to obtain end product that have a hydroxyl number within the targeted range of values.

### Glass Transition measurement method

The following procedure was used for a Mettler Toledo DSC 821^{e}. 10 - 15 mg of the grinded resin is placed in an aluminium sample pan provided with a lid. The lid is closed under a press and the sample pan is placed in the DSC 821^{e}. The Glass Transition Temperature program is started, involving uniform heating of the sample at a rate of 10°C/min from 0 °C up to 100°C.
The program automatically generates data for the glass transition temperature, there are several calculation methods (ASTM, DIN, Midpoint STAR) to get the Tg value, the ASTM is used.

The examples of resins below illustrate the present invention and coating compositions suitable for decorated substrate, by transfer printing could be made thereof.

### Example 1

### a)Synthesis of hydroxyl functional amorphous polyesters:

A mixture of 515 grams (4.95 moles) of neopentylglycol, 57 grams (3.17 moles) of deionized water, 7865 grams (65,54 moles) of trimethylolethane, 9289 grams (55.96 moles) of isophthalic acid, 12.5 grams of tris(2,4-ditert-butylphenyl)phosphite as antioxidant and 10.7 grams of MBTO as esterification catalyst is introduced into a 20 liters reactor provided with a stirrer, a nitrogen inlet and a packed distillation column connected to a water cooled condenser and an electronic thermometer to control the reaction temperature. The mixture is heated, under stirring and nitrogen sparge, to 165°C where water starts to distil from the reactor, then temperature is gradually raised to 210°C and maintained until a clear polyester containing hydroxyl groups is obtained with these properties: ICI viscosity (at 200°C): 1800 - 2000 mPa.s, Acid Number: 3 - 4 mgKOH/g.
Set and let the temperature decrease at 200°C, maintains at this temperature until a polyester bearing hydroxyl groups is obtained with these properties: 2100 - 2300 mPa.s at 200°C,
Acid Number: 2 - 3 mgKOH/g,
Hydroxyl value: 280 - 310 mgKOH/g.
Tg: 62 - 65 °C
Cool the resin at 180°C and remove it from the reactor.

### Comparative example

### b)Synthesis of hydroxyl functional amorphous polyesters:

A mixture of 168,4 grams (1.62 moles) of neopentylglycol, 18.7 grams (1.04 moles) of deionized water, 8677,29 grams (64,76 moles) of trimethylolpropane, 9289 grams (55.96 moles) of isophthalic acid, 12.5 grams of tris(2,4-ditert-butylphenyl)phosphite as antioxidant and 10.7 grams of MBTO as esterification catalyst is introduced into a 20 liters reactor provided with a stirrer, a nitrogen inlet and a packed distillation column connected to a water cooled condenser and an electronic thermometer to control the reaction temperature. The mixture is heated, under stirring and nitrogen sparge, to 165°C where water starts to distil from the reactor, then temperature is gradually raised to 210°C and maintained until a clear polyester containing hydroxyl groups is obtained with these properties: ICI viscosity (at 200°C): 2500 - 2700 mPa.s, Acid Number: 3 - 4 mgKOH/g.
Cool the resin at 180°C and remove it from the reactor.
The final specifications of the resin are:
ICI viscosity: 2700 - 2900 mPa.s at 200°C,
Acid Number: 3 - 4 mgKOH/g,
Hydroxyl value: 280 - 310 mgKOH/g.
Tg: 50 - 53 °C

## Claims

1. An amorphous polyester prepared from an acid constituent comprising from 0,1% to 100% moles of isophthalic acid or terephthalic acid, from 0 to 45% moles of at least one dicarboxylic acid or anhydride other than isophathalic or terephthalic acid and from 0,1% to 25% moles of polycarboxylic acid or anhydride containing at least three carboxyl groups and from an alcohol constituent comprising from 0,1% to 40% moles of neopentylglycol, from 0 to 40% moles of at least one dihydroxylated compound other than neopentylglycol and from 60 to 100% moles of polyhydroxylated compound containing at least 3 hydroxyl groups and from 0,1 to 10% moles of aliphatic, cycloaliphatic, containing trimethylolethane (TME), having a glass transition (Tg) of at least 60°C, and a hydroxyl number of 270 to 350 mgKOH/g, preferably 280 to 310 mgKOH/g.

2. The polyester resin prepared according to claim 1 comprising from 0,1% to 20% moles of polyhydroxylated compound containing at least 93% mole on hydroxyl groups of TME.

3. The polyester resin prepared according to claims 1 and 2 comprising from 0,1% to 100% moles of isophthalic containing at least 98% mole of isophthalic acid on acid groups.

4. The coating composition according to any one of the preceding claims **characterized in that** the cured coating has a Tg between 85 and 115°C.

5. The use of a coating according to claims 1 to 5 in the preparation of a decorated substrate, by dye ink sublimation technology.
